(19) Europäisches Patentamt
European Patent Office
Office européen des brevets

(11) EP 1 887 041 A1

(12) EUROPEAN PATENT APPLICATION
published in accordance with Art. 153(4) EPC

(43) Date of publication:
**13.02.2008 Bulletin 2008/07**

(21) Application number: **06746899.1**

(22) Date of filing: **26.05.2006**

(51) Int Cl.:
***C08L 33/06*** *(2006.01)* ***C08F 8/48*** *(2006.01)*

(86) International application number:
**PCT/JP2006/310570**

(87) International publication number:
**WO 2006/129573 (07.12.2006 Gazette 2006/49)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.05.2005 JP 2005158201**
**30.05.2005 JP 2005158206**

(71) Applicant: **Kaneka Corporation**
**Kita-ku**
**Osaka-shi, Osaka 530-8288 (JP)**

(72) Inventors:
- **TANAKA, Katsuyuki,**
**c/o KANEKA CORPORATION**
**Settsu-shi,**
**Osaka 5660072 (JP)**
- **KAWABATA, Hirosuke,**
**c/o KANEKA CORPORATION**
**Settsu-shi,**
**Osaka 5660072 (JP)**
- **HIIRO, Tomoki,**
**c/o KANEKA CORPORATION**
**Settsu-shi,**
**Osaka 5660072 (JP)**

(74) Representative: **TBK-Patent**
**Bavariaring 4-6**
**80336 München (DE)**

# (54) RESIN COMPOSITION

(57) It is an object of the present invention to provide a resin composition whose birefringence has been controlled. The object can be attained by a resin composition composed essentially of a resin (A) containing glutarimide units and acrylic ester units and a resin (B) containing glutarimide units, acrylic ester units, and aromatic vinyl units. The resin composition of the present invention is easy to manufacture, inexpensive, excellent in terms of transparency and heat resistance, and easily controllable in terms of orientation birefringence. Further, the resin composition of the present invention can be developed to be applied to an optical molding product of which transparency and heat resistance are required.

EP 1 887 041 A1

**Description**

TECHNICAL FIELD

The present invention relates to resin compositions. More specifically, the present invention relates to a resin composition whose birefringence has been controlled.

BACKGROUND ART

In recent years, electronic devices such as laptop computers, mobile phones, and mobile information terminals have been increasingly miniaturized, and the exploitation of their features of lightweight and compactness has caused them to be used for various purposes. Meanwhile, in the field of flat-panel displays such as liquid crystal displays and plasma displays, it has been required to prevent the weight of screens from increasing as their size increases.

In such electronic devices of which transparency is required, conventional members made of glass are being increasingly replaced by members made of highly transparent resin.

Various transparent resins such as polymethyl methacrylate have features such as good formability, good processability, unbreakability, lightweight, and inexpensiveness. Therefore, the transparent resins have been considered for a wider range of applications, for example, to liquid crystal displays, optical disks, and pick-up lenses. Actually, part of the transparent resins have already been in practical use.

As the transparent resins are more widely applied, for example, to headlight covers for use in automobiles and members for use in liquid crystal displays, the transparent resins are required to have heat resistance in addition to transparency. Although polymethyl methacrylate and polystyrene are highly transparent and relatively inexpensive, they have low heat resistance. Therefore, polymethyl methacrylate and polystyrene are only applied in a limited way.

Practical examples of a method for improving the heat resistance of polymethyl methacrylate include a method for copolymerizing methyl methacrylate with cyclohexyl maleimide. However, the method uses cyclohexyl maleimide, which is an expensive monomer, and therefore has such a problem that an attempt to achieve higher heat resistance results in a more expensive copolymer.

Meanwhile, there has been proposed a method for obtaining an imide resin by causing an imidization reaction between a primary amine and a methyl ester group in an extruder, the methyl ester group being contained in methyl methacrylate of polymethyl methacrylate (Patent Document 1) or of a poly[styrene-co-(methyl methacrylate)] (Patent Document 2, Patent Document 3, Patent Document 4, and Patent Document 5). It is disclosed that such resins exhibit good transparency and good heat resistance. Especially, the poly[co-co-(methyl methacrylate)] has a rate of imidization reaction that can be optionally controlled. In addition, as a copolymer, the poly[co-co-(methyl methacrylate)] has a composition ratio that can be optionally controlled. Therefore, the poly[co-co-(methyl methacrylate)] is expected to have a wider range of features than does an imide resin made from polymethyl methacrylate. However, these conventional technologies fail to provide a clear description of the features of the imidized poly[co-co-(methyl methacrylate)]. Especially, these conventional technologies also fail to provide a description of orientation birefringence.

Generally, a polymer has polymer chains that are oriented, for example, at the time of extrusion molding, and this often leads to birefringence. In order to eliminate such birefringence of a polymer, there have been proposed such methods as described in Seikei Kakou, Vol. 15, No. 3, p. 194 (Non-patent Document 1). Examples of the methods include: (i) a method for performing random copolymerization at an appropriate ratio between a monomer of a polymer indicating positive orientation birefringence and a monomer of a polymer indicating negative orientation birefringence; and (ii) a method for doping, in a polymer, a low-molecular compound having polarizability anisotropy. However, the method for performing random copolymerization at an appropriate ratio between a monomer of a polymer indicating positive orientation birefringence and a monomer of a polymer indicating negative orientation birefringence often uses expensive monomers such as a combination of benzyl methacrylate and methyl methacrylate and a combination of 2,2,2-trifluoroethyl methacrylate and methyl methacrylate. Further, the method for doping, in a polymer, a low-molecular compound having polarizability anisotropy has many problems. Examples of the problems include the high price of the low-molecular compound and the frequency with which the low-molecular compound bleeds out from the resulting molded article when used for a long time.

Further, Nikkei New Material, September 26, 1988, p. 56 (Non-patent Document 2) proposes methods for reducing the orientation birefringence of polycarbonate. Example of the methods include a method for blending polycarbonate and polystyrene and a method for graft-copolymerizing polystyrene with polycarbonate. However, the former lacks uniformity in terms of optical characteristics, and has such a problem, for example, that the transparency is reduced in cases where the compatibility of resins that are blended is low. The latter performs graft copolymerization, and therefore has such a problem that the steps are virtually complicated.

[Patent Document 1] United State Patent 4,246,374

[Patent Document 2] United State Patent 4,727,117
[Patent Document 3] United State Patent 4,954,574
[Patent Document 4] United State Patent 5,004,777
[Patent Document 5] United State Patent 5,264,483
[Non-patent Document 1] Seikei Kakou, Vol. 15, No. 3, p. 194
[Non-patent Document 2] Nikkei New Material, September 26, 1988, p. 56

DISCLOSURE OF THE INVENTION

PROBLEMS TO BE SOLVED BY THE INVENTION

Therefore, there has been a demand for a highly transparent and highly heat-resistant resin composition whose orientation birefringence can be controlled and a method for manufacturing the same.

MEANS TO SOLVE THE PROBLEMS

The inventors diligently studied in order to solve the foregoing problems. As a result, the inventors found that a resin composition obtained by mixing resins each having a specific constitution is easy to manufacture, inexpensive, excellent in terms of transparency and heat resistance, and controllable in terms of orientation birefringence. Thus, the inventors completed the present invention.

That is, the present invention relates to a resin composition composed essentially of (i) a resin (A) containing a repeating unit represented by following general formula (1) and a repeating unit represented by following general formula (2) and (ii) a resin (B) containing a repeating unit represented by following general formula (1), a repeating unit represented by following general formula (2), and a repeating unit represented by following general formula (3):

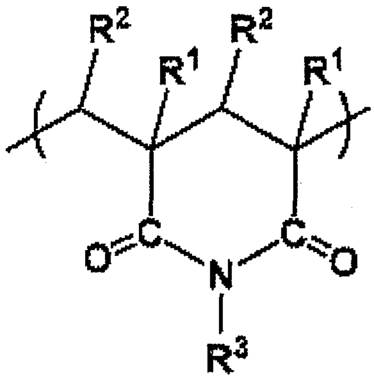

(1)

(where $R^1$ is hydrogen or an alkyl group having a carbon number of 1 to 8; $R^2$ is hydrogen or an alkyl group having a carbon number of 1 to 8; and $R^3$ is hydrogen, an alkyl group having a carbon number of 1 to 18, a cycloalkyl group having a carbon number of 3 to 12, or a substituent containing an aromatic ring having a carbon number of 5 to 15);

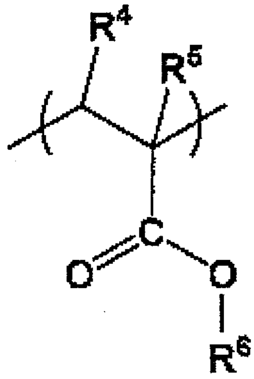

(2)

(where $R^4$ is hydrogen or an alkyl group having a carbon number of 1 to 8; $R^5$ is hydrogen or an alkyl group having a carbon number of 1 to 8; and $R^6$ is hydrogen, an alkyl group having a carbon number of 1 to 18, a cycloalkyl group having a carbon number of 3 to 12, or a substituent containing an aromatic ring having a carbon number of 5 to 15); and

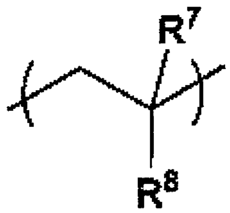

(3)

(where $R^7$ is hydrogen or an alkyl group having a carbon number of 1 to 8 and $R^8$ is an aryl group having a carbon number of 6 to 10).

A preferable aspect of the present invention relates to the resin composition characterized by including 0.1 to 50 wt% of the resin (A) and 50 to 99.9 wt% of the resin (B).

A preferable aspect of the present invention relates to the resin composition characterized in that orientation birefringence ranges from 0 to $0.1 \times 10^{-3}$.

A preferable aspect of the present invention relates to the resin composition characterized in that a photoelastic coefficient is not more than $10 \times 10^{-12} m^2/N$.

A preferable aspect of the present invention relates to the resin composition characterized in that a glass transition temperature is not less than 110°C.

Furthermore, the present invention relates to an optical resin composition composed mainly of a resin composition as described above.

Furthermore, the present invention relates to an optical resin molding product composed mainly of a resin composition as described above.

Furthermore, the present invention relates to a method for manufacturing a resin composition that is obtained by mixing (i) a resin (A) obtained by treating a (meth)acrylic ester polymer (C) with an imidizing agent, with (ii) a resin (B) obtained by treating a copolymer (D) of (meth)acrylic ester and aromatic vinyl with an imidizing agent.

Furthermore, the present invention relates to a method for manufacturing a resin composition that is obtained by treating, with an imidizing agent, a resin composition including a (meth)acrylic ester polymer (C) and a copolymer (D) of (meth)acrylic ester and aromatic vinyl.

EFFECTS OF THE INVENTION

The present invention makes it possible to provide a resin composition that is easy to manufacture, inexpensive, excellent in terms of transparency and heat resistance, and easily controllable in terms orientation birefringence. Further, the resin composition of the present invention can be developed to be applied to an optical molding product of which transparency and heat resistance are required.

BEST MODE FOR CARRYING OUT THE INVENTION

The present invention relates to a resin composition composed essentially of (i) a resin (A) containing a repeating unit represented by following general formula (1) and a repeating unit represented by following general formula (2) and (ii) a resin (B) containing a repeating unit represented by following general formula (1), a repeating unit represented by following general formula (2), and a repeating unit represented by following general formula (3):

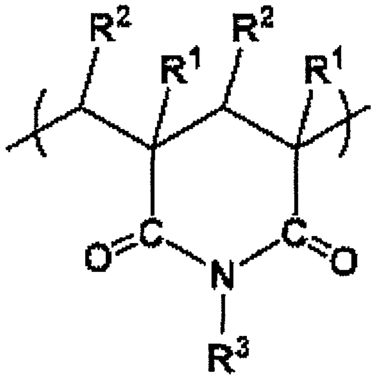

(1)

(where $R^1$ is hydrogen or an alkyl group having a carbon number of 1 to 8; $R^2$ is hydrogen or an alkyl group having a carbon number of 1 to 8; and $R^3$ is hydrogen, an alkyl group having a carbon number of 1 to 18, a cycloalkyl group having a carbon number of 3 to 12, or a substituent containing an aromatic ring having a carbon number of 5 to 15);

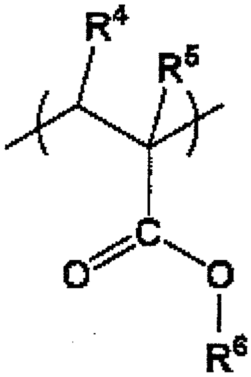

(2)

(where $R^4$ is hydrogen or an alkyl group having a carbon number of 1 to 8; $R^5$ is hydrogen or an alkyl group having a carbon number of 1 to 8; and $R^6$ is hydrogen, an alkyl group having a carbon number of 1 to 18, a cycloalkyl group having a carbon number of 3 to 12, or a substituent containing an aromatic ring having a carbon number of 5 to 15); and

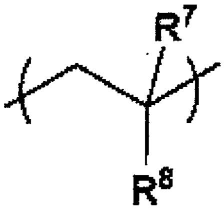

(3)

(where $R^7$ is hydrogen or an alkyl group having a carbon number of 1 to 8 and $R^8$ is an aryl group having a carbon number of 6 to 10).

As one of the essential components of the present invention, the resin (A) containing repeating units represented by general formula (1) and repeating units represented by following general formula (2) has first constitutional units, represented by general formula (1), each of which is often generally called a glutarimide unit (general formula (1) being hereinafter sometimes abbreviated as a glutarimide unit).

A preferable example of the glutarimide unit is such that $R^1$ and $R^2$ are hydrogen or a methyl group and $R^3$ is hydrogen, a methyl group, or a cyclohexyl group. It is especially preferable that $R^1$, $R^2$, and $R^3$ be a methyl group, hydrogen, and a methyl group, respectively.

The glutarimide units may be of the same type, or may be of plural types that differ in $R^1$, $R^2$, and $R^3$ from one another.

The resin (A) has second constitutional units, represented by general formula (2), each of which is often generally called a (meth)acrylic ester unit (general formula (2) being hereinafter sometimes abbreviated as a (meth)acrylic ester unit).

Examples of a (meth)acrylic compound or (meth)acrylic ester compound that yields such a (meth)acrylic ester unit include, but are not limited to, methyl (meth)acrylate, ethyl (meth)acrylate, butyl (meth)acrylate, isobutyl (meth) acrylate, t-butyl (meth)acrylate, benzyl (meth)acrylate, and cyclohexyl (meth)acrylate. Further, (i) acid anhydride such as maleic anhydride, (ii) half ester of such acid anhydride and linear or branched alcohol having a carbon number of 1 to 20 and (iii) $\alpha$, $\beta$-ethylenic unsaturated carboxylic acid such as acrylic acid, methacrylic acid, maleic acid, maleic anhydride, itaconic acid, itaconic anhydride, crotonic acid, fumaric acid, and citraconic acid can also be imidized, and therefore can be used for the present invention. Among these, methyl (meth)acrylate is especially preferable.

These second constitutional units may be of the same type, or may be of plural types that differ in $R^4$, $R^5$, and $R^6$ from one another.

As one of the essential components of the present invention, the resin (B) containing repeating units represented by general formula (1), repeating units represented by following general formula (2), and repeating units represented by following general formula (3) has first constitutional units, represented by general formula (1), each of which is often generally called a glutarimide unit.

A preferable example of the glutarimide unit is such that $R^1$ and $R^2$ are hydrogen or a methyl group and $R^3$ is hydrogen, a methyl group, or a cyclohexyl group. It is especially preferable that $R^1$, $R^2$, and $R^3$ be a methyl group, hydrogen, and a methyl group, respectively.

The glutarimide units may be of the same type, or may be of plural types that differ in $R^1$, $R^2$, and $R^3$ from one another.

The resin (B) has second constitutional units, represented by general formula (2), each of which is often generally called a (meth)acrylic ester unit.

Examples of a (meth)acrylic compound or (meth)acrylic ester compound that yields such a (meth)acrylic ester unit include, but are not limited to, methyl (meth)acrylate, ethyl (meth)acrylate, butyl (meth)acrylate, isobutyl (meth) acrylate, t-butyl (meth)acrylate, benzyl (meth)acrylate, and cyclohexyl (meth)acrylate. Further, (i) acid anhydride such as maleic anhydride, (ii) half ester of such acid anhydride and linear or branched alcohol having a carbon number of 1 to 20 and (iii) $\alpha$,$\beta$-ethylenic unsaturated carboxylic acid such as acrylic acid, methacrylic acid, maleic acid, maleic anhydride, itaconic acid, itaconic anhydride, crotonic acid, fumaric acid, and citraconic acid can also be imidized, and therefore can be used for the present invention. Among these, methyl (meth)acrylate is especially preferable.

These second constitutional units may be of the same type, or may be of plural types that differ in $R^4$, $R^5$, and $R^6$ from one another.

The resin (B) has third constitutional units, represented by general formula (3), each of which is often generally called an aromatic vinyl unit (general formula (3) being hereinafter sometimes abbreviated as an aromatic vinyl unit).

Preferable examples of the aromatic vinyl constitutional unit include styrene and $\alpha$-methylstyrene. Among these, styrene is especially preferable.

These third constitutional units may be of the same type, or may be of plural types that differ in $R^7$ and $R^8$ from one another.

The amount of glutarimide units, represented by general formula (1), which are contained in each of the resins (A) and (B) each serving as an essential component of the present invention preferably ranges from 20 wt% to 95 wt%, more preferably from 25 wt% to 95 wt%, or even more preferably from 30 wt% to 80 wt%. In cases where the amount of glutarimide units is smaller than this range, the resulting imide resin may have insufficient heat resistance and impaired transparency. Further, in cases where the amount of glutarimide units exceeds this range, the heat resistance may be unnecessarily increased so that molding becomes difficult. In addition, the resulting molding product may become extremely brittle in terms of mechanical strength. Further, the transparency may be impaired.

The amount of aromatic vinyl units, represented by general formula (3), which are contained in the resin (B) serving as an essential component of the present invention preferably ranges from 1 wt% to 80 wt%, or more preferably

5' wt% to 60 wt%, with respect to the total of repeating units contained in the resin (B). In cases where the amount of aromatic vinyl units is larger than this range, the resulting imide resin may have insufficient heat resistance. In cases where the amount of aromatic vinyl units is smaller than this range, the resulting molding product may have a decrease in mechanical strength.

With each of the resins (A) and (B) each serving as an essential component of the present invention, other constitutional units may be copolymerized as needed. Examples of the other constitutional units include constitutional units obtained by copolymerizing nitrile monomers such as acrylonitrile and methacrylonitrile with maleimide monomers such as maleimide, N-methylmaleimide, N-phenylmaleimide, and N-cyclohexylmaleimide. They may be directly copolymerized with each other or may be graft-copolymerized with each other in the resin.

The resin composition of the present invention can have small optical anisotropy. The term "small optical anisotropy" here means that the optical anisotropy is required to be small not only in terms of the in-plane directions (length direction and width direction) of a film but also in terms of the thickness direction. That is, this means that the in-plane retardation $Re=(nx-ny)\times d$ and the thickness-direction retardation $Rth=|(nx+ny)/2-nz|\times d$ are both small (the algebraic sign "||" representing an absolute value), where nx is the refractive index of the X axis, which is the direction in which the in-plane refractive index is largest; ny is the refractive index of the Y axis, which is the direction perpendicular to the X axis; and nz is the refractive index of the Z axis, which is the thickness direction of the film (An ideal film having complete optical isotropy in three-dimensional directions has an in-plane retardation Re of 0 and a thickness-direction retardation of 0.).

The resin composition of the present invention is characterized in that its orientation birefringence can be controlled (Note that the resin composition of the present invention can be used by setting the orientation birefringence at a specific level as needed.). The term "orientation birefringence" refers to birefringence that is caused in cases where drawing is performed at a predetermined temperature and a predetermined draw ratio. In this specification, unless otherwise noted, the terms "orientation birefringence" refers to birefringence that is caused in cases where drawing is performed at a draw ratio of 100% and a temperature 5°C higher than the glass transition temperature of an imide resin. Note that the orientation birefringence is defined as $\Delta n=nx-ny=Re/d$ with use of the aforementioned nx and ny, and is measured with use of a retardation meter.

The value of orientation birefringence is preferably ranges from 0 to $0.1\times10^{-3}$, or more preferably from of 0 to $0.01\times10^{-3}$. In cases where the orientation birefringence falls out of the range, birefringence is easily caused in response to an environmental change when molding and processing are performed. This makes it difficult to obtain a stable optical characteristic.

In order to obtain a resin composition having substantially no orientation birefringence, it is necessary to adjust the amount of constitutional units contained in the polymer. However, depending on the type of available starting material, it has been difficult to set the orientation birefringence within the range and the heat resistance and other properties of the resulting resin have been limited.

In order to set the orientation birefringence within the range, it is preferable that the weight ratio between the repeating units represented by general formula (1) and the repeating units represented by general formula (3) range from 2.0:1.0 to 4.0:1.0, more preferably from 2.5:1.0 to 4.0:1.0, or even more preferably from 3.0:1.0 to 3.5:1.0. In cases where the definition is provided by using a molar ratio instead of the weight ratio, it is preferable that the molar ratio between the repeating units represented by general formula (1) and the repeating units represented by general formula (3) range from 1.0:1.0 to 4.0:1.0, more preferably from 1.0:1.0 to 3.0:1.0, or even more preferably from 1.2:1.0 to 2.5: 1.0. Note that the molar ratio refers to a numeral ratio of the repeating units contained in the copolymer.

The blend ratio between the resins (A) and (B) of the resin composition of the present invention is preferably such that the resin (A) ranges from 0.1 to 50 wt% and the resin (B) ranges from 50 wt% to 99.9 wt%. By changing the blend ratio between the resins within the ranges, it becomes possible to control the orientation birefringence in so far as the heat resistance is good. Furthermore, by adjusting the amount of constitutional units contained in each of the resins (A) and (B), it becomes possible to control the orientation birefringence in a wide range.

Further, the amount of aromatic vinyl units, represented by general formula (3), which are contained in the resin composition of the present invention preferably ranges from 1 wt% to 70 wt%. In cases where the amount of aromatic vinyl units exceeds this range, the resulting imide resin may have insufficient heat resistance. In cases where the amount of aromatic vinyl units is smaller than this range, the resulting molding product may have a decrease in mechanical strength.

As described above, the present invention is useful not only in preparing a resin composition having substantially no orientation birefringence, but also in preparing a resin composition having a desired level of orientation birefringence.

It is preferable that the resin composition of the present invention have a weight-average molecular weight of $1\times10^4$ to $1\times10^5$. In cases where the weight-average molecular weight is smaller than the value, a film obtained from the resin composition may have insufficient mechanical strength. In cases where the weight-average molecular weight is not less than the value, the resin composition may have a high viscosity when melted. This may cause a reduction in film productivity.

It is preferable that the glass transition temperature of the resin composition be not less than 110°C, more preferably not less than 120°C, or even more preferably not less than 125°C. In cases where the glass transition temperature is lower than the value, the resin has such insufficient heat resistance as to be only applied in a limited way.
To the resin composition of the present invention, another thermoplastic resin can be added as needed.
It is preferable that the photoelastic coefficient of the resin composition of the present invention be not more than $10\times 10^{-12}m^2/N$, or more preferably not more than $5\times10^{-12}m^2/N$. In cases where the absolute value of the photoelastic coefficient is larger than $10 \times 10^{-12}m^2/N$, there is a high tendency to light leakage. Such a tendency becomes pronounced especially in a high-temperature and high-humidity environment.
The photoelastic coefficient is as follows: when a stress (ΔF) is generated by exerting an external force to an isotopic solid, optical anisotropy temporarily occurs, so that a birefringence (Δn) occurs. A ratio of the stress and the birefringence is referred to as the photoelastic coefficient (c), and is expressed as:

$$c=\Delta n/\Delta F.$$

In the present invention, the photoelastic coefficient is a value obtained by carrying out measurement at a wavelength of 515 nm, 23°C, and 50 %RH, in accordance with a Senarmont method.
The composition of the present invention can be obtained by mixing (i) a resin (A) obtained by treating a (meth) acrylic ester polymer (C) with an imidizing agent, with (ii) a resin (B) obtained by treating a copolymer (D) of (meth)acrylic ester and aromatic vinyl with an imidizing agent.
Alternatively, the composition of the present invention can be obtained treating, with use of an imidizing agent, a resin composition including a (meth)acrylic ester polymer (C) and a copolymer (D) of (meth)acrylic ester and aromatic vinyl.
The resin (A) serving as one of the essential components of the present invention can be obtained, for example, by imidzing the (meth)acrylic ester polymer (C).
The (meth)acrylic ester polymer (C) that can be used in the present invention may be a linear polymer, a block polymer, a core shell polymer, a branched polymer, a ladder polymer, or a cross-linked polymer as long as the (meth) acrylic ester polymer (C) essentially contains any one of the following (1) to (5): (1) a polymer formed solely from (meth) acrylic compound monomers that can undergo an imidization reaction; (2) a polymer formed solely from (meth)acrylic ester compound monomers that can undergo an imidization reaction; (3) a copolymer formed from (meth)acrylic compound monomers and (meth)acrylic ester compound monomers; (4) a (meth)acrylic compound; and (5) a (meth)acrylic ester compound. It does not matter whether the block polymer is an A-B type, an A-B-C type, an A-B-A type, or other type. There is no problem in cases where the core shell polymer includes a single core layer and a single shell layer or in cases where the core and the shell are respectively multi-layered.
Among these, a methyl methacrylate polymer is preferable in terms of its balance among availability, properties, and reactivity. A linear polymer of methyl methacrylate and a linear copolymer of methyl methacrylate and alkyl acrylate are especially desirable.
The resin (B) can be obtained, for example, by imidizing the polymer (D) of (meth)acrylic ester and aromatic vinyl.
The polymer (D) of (meth)acrylic ester and aromatic vinyl that can be used in the present invention may be a linear polymer, a block polymer, a core shell polymer, a branched polymer, a ladder polymer, or a cross-linked polymer as long as the polymer (D) of (meth)acrylic ester and aromatic vinyl essentially contains any one of the following (1) to (6): (1) a polymer formed solely from (meth)acrylic compound monomers that can undergo an imidization reaction; (2) a polymer formed solely from (meth)acrylic ester compound monomers that can undergo an imidization reaction; (3) a copolymer formed from (meth)acrylic compound monomers and (meth)acrylic ester compound monomers; (4) a (meth) acrylic compound; (5) a (meth)acrylic ester compound; and (6) a styrene compound. It does not matter whether the block polymer is an A-B type, an A-B-C type, an A-B-A type, or other type. There is no problem in cases where the core shell polymer includes a single core layer and a single shell layer or in cases where the core and the shell are respectively multi-layered.
Among these, a copolymer of methyl methacrylate and styrene is especially desirable in terms of its balance among availability, properties, and reactivity.
Alternatively, the resin composition of the present invention can be obtained by preparing a mixture of the (meth)acrylic ester polymer (C) and the copolymer (D) of (meth)acrylic ester and aromatic vinyl and then by treating the resin composition with an imidizing agent. The blend ratio is preferably such that the (meth)acrylic ester polymer (C) ranges from 0.1 to 50 wt% and the copolymer (D) of (meth)acrylic ester and aromatic vinyl ranges from 50 wt% to 99.9 wt%. By changing the blend ratio between the resins within the ranges, it becomes possible to control the orientation birefringence in so far as the heat resistance is good. Furthermore, by adjusting the amount of constitutional units contained in each of the (meth)acrylic ester polymer (C) and the copolymer (D) of (meth)acrylic ester and aromatic vinyl,

it becomes possible to control the orientation birefringence in a wide range.

The imidizing agent is not particularly limited as long as glutarimide units represented by general formula (1) can be generated. Examples of the imidizing agent include: ammonia; aliphatic hydrocarbonous amine such as methylamine, ethylamine, n-propylamine, i-propylamine, n-butylamine, i-butylamine, tert-butylamine, and n-hexylamine; aromatic hydrocarbonous amine such as aniline, benzylamine, toluidine, and trichloroaniline; and alicyclic hydrocarbonous amine such as cyclohexylamine. Further, it is possible to use a urea compound, which generates amine upon being heated, such as urea, 1,3-dimethyl urea, 1,3-diethyl urea, and 1,3-dipropyl urea. Among these imidization agents, methylamine, ammonia, and cyclohexylamine are preferable in terms of cost. Among these, methylamine is especially preferable.

The imidization reaction is preferably such that the imidizing agent is treated in an atmosphere of inert gas. When the imidizing agent is treated in the presence of oxygen, there is a tendency to deterioration in degree of yellow. Therefore, it is preferable that air contained in the system be sufficiently substituted by inert gas such as nitrogen.

The amount of imidizing agent to be added depends on the imidization ratio for exhibiting necessary properties. In order to lower the degree of yellow of the resulting resin composition, it is preferable that the amount of imidizing agent to be added be not more than 40 parts by weight, or more preferably not more than 30 parts by weight. In cases where the amount of imidizing agent to be used is not less than 40 parts by weight, the resin composition tends to have a high degree of yellow. This may make it impossible to obtain a colorless and transparent resin.

The resin composition of the present invention may be obtained by any apparatus that can treat the imidizing agent in an atmosphere of inert gas. However, resin composition of the present invention may be obtained, for example, by using an extruder or the like or may be obtained by using a batch-type reaction chamber (pressure vessel) or the like.

The resin composition of the present invention can be manufactured by using various types of extruder. Usable examples of the extruder include a single screw extruder, a twin screw extruder, and a multi screw extruder. Especially, the twin screw extruder is preferably used as an extruder that can encourage the imidizing agent to be mixed with the starting material polymer.

Types of the twin screw extruder include a non-intermeshed co-rotation twin screw extruder, an intermeshed co-rotation twin screw extruder, a non-intermeshed counter-rotation twin screw extruder, and an intermeshed counter-rotation twin screw extruder. Among these twin screw extruders, the intermeshed co-rotation twin screw extruder is preferable because it can rotate at such a high speed as to be able to encourage the imidizing agent to be mixed with the starting material polymer. These extruders may be independently used or may be serially connected to each other.

The resin composition of the present invention is preferably obtained at a reaction temperature of 150°C to 400°C, more preferably 180°C to 320°C, even more preferably 200°C to 280°C. This allows the imidization to proceed, and inhibits the resin, for example, from being decomposed and colored yellow due to an excessive thermal history.

Further, in order to remove an unreacted imidizing agent, a by-product such as primary alcohol, or monomers, it is preferable to provide the extruder with a vent port that can attain a reduced pressure of not more than atmospheric pressure.

Instead of the extruder, a reaction apparatus can be used which can handle a high viscosity. Examples of such a reaction apparatus include a horizontal twin screw reaction apparatus (e.g., BIBOLAK; manufactured by Sumitomo Heavy Industries, Ltd.) and a vertical twin screw mixing vessel (e.g., SUPERBLEND; manufactured by Sumitomo Heavy Industries, Ltd.).

The resin composition of the present invention may be manufactured by any batch-type reaction chamber (pressure vessel) as long as the batch-type reaction chamber is structured such that the starting material resin can be added and stirred by heating in an atmosphere of inert gas and the imidizing agent can be added. However, the progress of the reaction sometimes results in a higher melting viscosity. Therefore, it is preferable that the batch-type reaction chamber have a high level of stirring efficiency. Examples of such a batch-type reaction chamber include a stirring vessel (MAX BLEND; manufactured by Sumitomo Heavy Industries, Ltd.).

In performing imidization with the imidizing agent, a commonly-used catalyst, a commonly-used antioxidant, a commonly-used heat stabilizer, a commonly-used elasticizer, a commonly-used lubricant, a commonly-used UV absorbent, a commonly-used antistatic agent, a commonly-used coloring agent, a commonly-used shrinkage inhibitor, and the like may be added as long as the object of the present invention is not impaired.

For the purpose of reducing carboxyl groups and acid anhydride groups that are additionally produced in manufacturing the resin composition of the present invention, modification can be performed with an esterification agent.

Examples of the esterification agent include dimethyl carbonate, 2,2-dimethoxypropane, dimethyl sulfoxide, triethyl orthoformate, trimethyl orthoacetate, trimethyl orthoformate, diphenyl carbonate, dimethyl sulfate, methyltoluenesulfonate, methyltrifluoromethylsulfonate, methyl acetate, methanol, ethanol, methyl isocyanate, p-chlorophenyl isocyanate, dimethylcarbodimide, dimethyl-t-butylsilyl chloride, isopropenyl acetate, dimethylurea, tetramethylammonium hydroxide, dimethyldiethoxysilane, tetra-N-butoxy silane, dimethyl(trimethylsilane)phosphite, trimethyl phosphite, trimethyl phosphate, tricresyl phosphate, diazomethane, ethylene oxide, propylene oxide, cyclohexane oxide, 2-ethylhexyl glycidyl ether, phenyl glycidyl ether, and benzyl glycidyl ether.

The resin composition obtained in the present invention may be used independently or may be blended with another resin.

A resin composed mainly of the resin composition of the present invention can be suitably used as an optical resin composition, and can also be suitably used as an optical resin molding product.

The imide resin of the present invention can be molded into a molding product by any conventionally publicly-known method. Examples of such a method include injection molding, melt extrusion film molding, inflation molding, blow molding, compression molding, and spinning molding. Further, it is possible to adopt a flow casting method of molding the imide resin of the present invention after having dissolved the imide resin in a solvent capable of dissolving the imide resin. It is possible to adopt any one of those methods. However, the melt extrusion film molding, which uses no solvent, shows up the effects of the present invention. As such, the method is preferable in terms of manufacturing cost and the impact of a solvent on the global environment.

In performing molding and processing, a commonly-used antioxidant, a commonly-used heat stabilizer, a commonly-used elasticizer, a commonly-used lubricant, a commonly-used UV absorbent, a commonly-used antistatic agent, a commonly-used coloring agent, a commonly-used shrinkage inhibitor, a commonly-used filler, and the like may be added as long as the object of the present invention is not impaired.

[Examples]

In the following, the present invention will be explained more in detail with reference to Examples. However, the present invention is not limited solely to these Examples. In Examples and Comparative Examples below, the properties were measured in the following manners.

(1) Measurement of the Imidization Ratio

An IR spectrum of a pellet obtained from the product was measured at room temperature with use of a TravelIR (manufactured by SensIR Technologies). In the IR spectrum thus obtained, an absorbance at 1720 $cm^{-1}$ and an absorbance at 1660 $cm^{-1}$ were observed. The absorbance at 1720 $cm^{-1}$ is attributed to estercarbonyl groups, and the absorbance at 1660 $cm^{-1}$ is attributed to imidecarbonyl groups. The imidization ratio was calculated in accordance with the ratio of (i) the absorbance at 1720 $cm^{-1}$ to (ii) the absorbance at 1660 $cm^{-1}$. The term "imidization ratio" here refers to the proportion of the imidecarbonyl groups in the whole carbonyl groups.

(2) Styrene Content

A solution was prepared by dissolving 10 mg of the product in 1 g of $CDCl_3$. The solution thus prepared was measured at room temperature with use of an NMR measurement apparatus (Gemini-300; manufactured by Varian Inc.). As a result, a $^1$H-NMR spectrum was obtained. In the spectrum thus obtained, an integrated intensity attributed to aromatic protons and an integrated intensity attributed to aliphatic protons were observed. The styrene content was determined in accordance with the ratio of (i) the integrated intensity attributed to the aromatic protons to (ii) the integrated intensity attributed to the aliphatic protons.

(3) Glass Transition Temperature (Tg)

The glass transition temperature of 10 mg of the product was measured with use of a differential scanning calorimeter (DSC-50; manufactured by Shimadzu Corporation) at a heating rate of 20°C/min in an atmosphere of nitrogen in accordance with a midpoint method.

(4) Total-light Transmittance

A solution having a resin concentration of 25 wt% was prepared by dissolving the resin composition in methylene chloride. The solution thus prepared was applied onto a PET film, and then the PET film was dried. As a result, a film was prepared. From the film thus prepared, a test piece with the dimensions of 50 mm $\times$ 50 mm was cut out. The total-light transmittance of the test piece was measured with use of a turbidimeter (300A; manufactured by Nippon Denshoku Industry Co., Ltd.) at a temperature of 23$\pm$2°C and a humidity of 50$\pm$5%. The measurement was carried out in conformity to JIS K7105.

(5) Turbidity

The turbidity of the test piece obtained in Section (4) was measured with use of the turbidimeter (300A manufactured by Nippon Denshoku Industry Co., Ltd.) at a temperature of 23±2°C and a humidity of 50±5%. The measurement was carried out in conformity to JIS K7136.

(6) Orientation Birefringence

From the film prepared in Section (4), a sample having a width of 50 mm and a length of 150 mm was cut out. The sample was drawn at a draw ratio of 200% at a temperature 5°C higher than the glass transition temperature. As a result, a uniaxially drawn film was prepared. From a transversely central portion of the uniaxially drawn film, a test piece with the dimensions of 35 mm × 35 mm was cut out. The retardation of the test piece was measured with use of an automatic birefringence meter (KOBRA-WR; manufactured by Oji Scientific Instruments) at a temperature of 23±2°C and a humidity of 50±5% by using a light ray having a wavelength of 590 nm and an incidence angle of 0°. Then, the thickness of the test piece was measured with use of a digimatic indicator (manufactured by Mitutoyo Corporation) at a temperature of 23±2°C and a humidity of 50±5%. The orientation birefringence was obtained by dividing the retardation by the thickness.

(Manufacturing Example 1)

An imide resin was manufactured by imidizing (i) a commercially available methacrylic resin (SUMIPEX MH; manufactured by Sumitomo Chemical Co., Ltd.) with use of (ii) monomethylamine serving as an imidizing agent. The extruder used herein is an interlocking unidirectional rotation type two-axle extruder having a bore diameter of 40 mm. The temperature of each temperature control zone of the extruder was set at 270°C. The screw rotation speed was set at 200 rpm. The methacrylic resin was fed to the extruder at a feed rate of 20 kg/hr, and monomethylamine was fed in 25 parts by weight of the methacrylic resin. The methacrylic resin was fed through the hopper, and was melted in the kneading block such that the kneading block was filled with the resin thus melted. Thereafter, monomethylamine was injected through the nozzle. A seal ring was placed at the end of the reaction zone so that the reaction zone was filled with the resin. After the reaction, the pressure on the vent port was reduced to -0.09 MPa so that the by-products and the excess methylamine were distilled off. The resin was extruded through a die provided at an exit of the extruder, so as to be shaped into a strand. The resin thus extruded was cooled down in a water tank, and then was pelletized by a pelletizer.

Table 1 shows the imidization ratio and glass transition temperature of the imide resin (a) thus obtained.

[Table 1]

| | Manufacturing Example | | | Commercially-available imide resin |
|---|---|---|---|---|
| | 1 | 2 | 3 | |
| Imide resin | (a) | (b) | (c) | (d) |
| Styrene ratio (mol%) | 0 | 22 | 30 | 0 |
| Imidization ratio (mol%) | 69 | 70 | 70 | 70 |
| Glass transition temperature (°C) | 155 | 157 | 152 | 156 |

(Manufacturing Example 2)

An imide resin was manufactured in the same manner as in Manufacturing Example 1 by imidizing a polymethyl-methacrylate-and-styrene copolymer (having a styrene content of 22 wt%) with use of monomethylamine serving as an imidizing agent. The temperature of each temperature control zone of the extruder was set at 270°C. The screw rotation speed was set at 200 rpm. The methacrylic resin was fed to the extruder at a feed rate of 20 kg/hr, and monomethylamine was fed in 20 parts by weight of the polymethyl-methacrylate-and-styrene copolymer.

Table 1 shows the imidization ratio, glass transition temperature, and styrene content of the imide resin (b) thus obtained.

(Manufacturing Example 3)

An imide resin was manufactured in the same manner as in Manufacturing Example 1 except that a polymethyl-methacrylate-and-styrene copolymer (having a styrene content of 30 wt%) was used.

Table 1 shows the imidization ratio, glass transition temperature, and styrene content of the imide resin (c)

thus obtained:

(Example 1)

Table 2 shows the total-light transmittance, turbidity, and orientation birefringence of a film made of a resin composition obtained by mixing the imide resin (a) of Manufacturing Example 1 and the imide resin (b) of Manufacturing Example 2 at a weight ratio of 10:90.

[Table 2]

| | | Example | | | Comparative Example |
|---|---|---|---|---|---|
| | | 1 | 2 | 3 | 1 |
| Blending ratio | Type | (a)/(b) | (a)/(c) | (b) / (d) | (b) |
| | (wt%/wt%) | 10/90 | 33/67 | 90/10 | 100 |
| Transparency: Turbidity (%) | | 0.7 | 0.5 | 0.7 | 0.5 |
| Total-light transmittance | | 92 | 92 | 92 | 91 |
| Orientation birefringence ($\times 10^{-3}$) | | 0.03 | 0.05 | 0.05 | 0.12 |

(Example 2)

Table 2 shows the total-light transmittance, turbidity, and orientation birefringence of a film made of a resin composition obtained by mixing the imide resin (a) of Manufacturing Example 1 and the imide resin (c) of Manufacturing Example 3 at a weight ratio of 33:67.

(Example 3)

Table 2 shows the total-light transmittance, turbidity, and orientation birefringence of a film made of a resin composition obtained by mixing the imide resin (b) of Manufacturing Example 2 and a commercially-available imide resin (d) (PLEXIMID8805; manufactured by Roehm Inc.) at a weight ratio of 10:90. (See Table 1 for the imidization ratio, glass transition temperature, and styrene content of the imide resin (d).)

(Comparative Example 1)

Table 2 shows the total-light transmittance, turbidity, and orientation birefringence of a film made of the imide resin (b) obtained in Manufacturing Example 2.

(Example 4)

A resin was obtained by dry-blending 10 wt% of a commercially-available methacrylic resin (SUMIPEX MH; manufactured by Sumitomo Chemical Co., Ltd.) and 90 wt% of a polymethyl-methacrylate-and-styrene copolymer (having a styrene content of 22 wt%). An imide resin was manufactured by imidizing the obtained resin with use of monomethylamine serving as an imidizing agent. The extruder used herein is an interlocking unidirectional rotation type two-axle extruder having a bore diameter of 40 mm. The temperature of each temperature control zone of the extruder was set at 270°C. The screw rotation speed was set at 200 rpm. The methacrylic resin was fed to the extruder at a feed rate of 20 kg/hr, and monomethylamine was fed in 20 parts by weight of the methacrylic resin. The resin composition was fed through the hopper, and then was melted in the kneading block so that the kneading block was filled with the resin thus melted. Thereafter, monomethylamine was injected through the nozzle. A seal ring was placed at the end of the reaction zone so that the reaction zone was filled with the resin. After the reaction, the pressure on the vent port was reduced to -0.09 MPa so that the by-products and the excess methylamine were distilled off. The resin was extruded through a die provided at an exit of the extruder, so as to be shaped into a strand. The resin thus extruded was cooled down in a water tank, and then was pelletized by a pelletizer.

Table 3 shows the imidization ratio and glass transition temperature of the resin composition thus obtained and the total-light transmittance, turbidity, and orientation birefringence of a film made of the resin composition.

[Table 3]

| | Example | | | Comparative Example |
|---|---|---|---|---|
| | 4 | 5 | 6 | 2 |
| Imidization ratio (mol%) | 68 | 70 | 69 | 68 |
| Glass transition temperature (°C) | 155 | 157 | 156 | 156 |
| Transparency: Turbidity (%) | 0.7 | 0.5 | 0.7 | 0.5 |
| Total-light transmittance | 92 | 92 | 92 | 91 |
| Orientation birefringence ($\times 10^{-3}$) | 0.02 | 0.04 | 0.05 | 0.12 |

(Example 5)

A resin composition was obtained in the same manner as in Example 4 except that a resin obtained by dry-blending 33 wt% of a commercially-available methacrylic resin (SUMIPEX MH; manufactured by Sumitomo Chemical Co., Ltd.) and 67 wt% of a polymethyl-methacrylate-and-styrene copolymer (having a styrene content of 30 wt%) was used.

Table 3 shows the imidization ratio and glass transition temperature of the resin composition thus obtained and the total-light transmittance, turbidity, and orientation birefringence of a film made of the resin composition.

(Example 6)

A resin composition was obtained in the same manner as in Example 4 except that a resin obtained by dry-blending 50 wt% of a commercially-available methacrylic resin (SUMIPEX MH; manufactured by Sumitomo Chemical Co., Ltd.) and 50 wt% of a polymethyl-methacrylate-and-styrene copolymer (having a styrene content of 40 wt%) was used.

Table 3 shows the imidization ratio and glass transition temperature of the resin composition thus obtained and the total-light transmittance, turbidity, and orientation birefringence of a film made of the resin composition.

(Comparative Example 2)

An imide resin was obtained in the same manner as in Example 4 except that a polymethyl-methacrylate-and-styrene copolymer resin (having a styrene content of 22 wt%) was used.

Table 3 shows the imidization ratio and glass transition temperature of the resin composition thus obtained and the total-light transmittance, turbidity, and orientation birefringence of a film made of the resin composition.

INDUSTRIAL APPLICABILITY

A molded article obtained from a resin composition of the present invention can be directly used as a final product for various purposes. Alternatively, the molded article can be processed in various ways to be used for various purposes. For example, the molded article can applied to the following fields: (i) a field of imaging such as shooting lenses, finders, filters, prisms, Fresnel lenses for use in cameras, VCRs, and projectors; (ii) a field of lenses such as pick-up lenses for optical disks for use in CD players, DVD players, MD players, and the like; (iii) a field of optical recording for optical disks for use in CD players, DVD players, MD players, and the like; (iv) a field of information devices such as (a) liquid crystal display films such as light guide plates for liquid crystal displays, protection films for polarizers, and retardation films and (b) surface protection films; (v) a field of optical communication such as optical fibers, optical switches, and optical connectors; (vi) a field of vehicles such as automobile headlight lenses, automobile taillight lenses, automobile inner lenses, automobile instrument covers, and automobile sunroofs; (vii) a field of medical devices such as eyeglasses, contact lenses, endoscope lenses, and medical supplies requiring sterilization; (viii) a field of construction/building materials such as road photic plates, double-glazed lenses, transom windows, carports, illumination lenses, illumination covers, and construction siding boards; and (ix) a microwave oven cooking containers (food vessel). Especially, a molding product and film of the present invention exhibit such excellent optical isotropy, transparency, low birefringence, and other properties as to be able to be suitably used for publicly-known optical applications such as liquid crystal display peripherals such as optical isotropic films, protection films for polarizers, and transparent conductive films.

## Claims

1. A resin composition composed essentially of (i) a resin (A) containing a repeating unit represented by following general formula (1) and a repeating unit represented by following general formula (2) and (ii) a resin (B) containing a repeating unit represented by following general formula (1), a repeating unit represented by following general formula (2), and a repeating unit represented by following general formula (3):

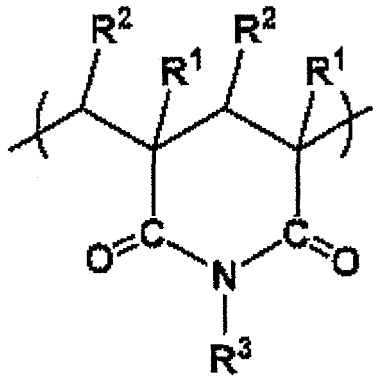

(1)

(where $R^1$ is hydrogen or an alkyl group having a carbon number of 1 to 8; $R^2$ is hydrogen or an alkyl group having a carbon number of 1 to 8; and $R^3$ is hydrogen, an alkyl group having a carbon number of 1 to 18, a cycloalkyl group having a carbon number of 3 to 12, or a substituent containing an aromatic ring having a carbon number of 5 to 15);

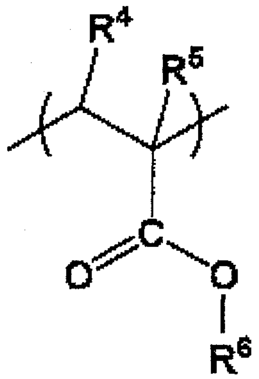

(2)

(where $R^4$ is hydrogen or an alkyl group having a carbon number of 1 to 8; $R^5$ is hydrogen or an alkyl group having a carbon number of 1 to 8; and $R^6$ is hydrogen, an alkyl group having a carbon number of 1 to 18, a cycloalkyl group having a carbon number of 3 to 12, or a substituent containing an aromatic ring having a carbon number of 5 to 15); and

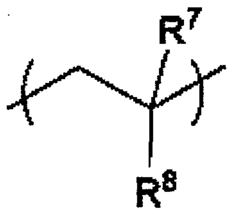

(3)

(where $R^7$ is hydrogen or an alkyl group having a carbon number of 1 to 8 and $R^8$ is an aryl group having a carbon number of 6 to 10).

2. The resin composition as set forth in claim 1, including 0.1 wt% to 50 wt% of the resin (A) and 50 wt% to 99.9 wt% of the resin (B).

3. The resin composition as set forth in claim 1 or 2, wherein orientation birefringence ranges from 0 to 0. 1 $\times$ 10-3.

4. The resin composition as set forth in any one of claims 1 to 3, wherein a photoelastic coefficient is not more than $10\times10^{-12}m^2/N$.

5. The resin composition as set forth in any one of claims 1 to 4, wherein a glass transition temperature is not less than 110°C.

6. An optical resin composition composed mainly of a resin composition as set forth in any one of claims 1 to 5.

7. An optical resin molding product composed mainly of a resin composition as set forth in claim 6.

8. A method for manufacturing a resin composition as set forth in any one of claims 1 to 5, wherein the resin composition is obtained by mixing (i) a resin (A) which is obtained by treating a (meth)acrylic ester polymer (C) with an imidizing agent, with (ii) a resin (B) which is obtained by treating a copolymer (D) of (meth)acrylic ester and aromatic vinyl with an imidizing agent.

9. A method for manufacturing a resin composition as set forth in any one of claims 1 to 5, wherein the resin composition is obtained by treating, with an imidizing agent, a resin composition including a (meth)acrylic ester polymer (C) and a copolymer (D) of (meth)acrylic ester and aromatic vinyl.

**INTERNATIONAL SEARCH REPORT**

International application No.
PCT/JP2006/310570

A. CLASSIFICATION OF SUBJECT MATTER
*C08L33/06*(2006.01)i, *C08F8/48*(2006.01)i

According to International Patent Classification (IPC) or to both national classification and IPC

B. FIELDS SEARCHED

Minimum documentation searched (classification system followed by classification symbols)
C08L33/00-26, C08F20/00-22/40, 220/00-222/40, C08F8/00-50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 3-195710 A (The Dow Chemical Co.), 27 August, 1991 (27.08.91), Claims 1 to 13, 16; Figs. 3, 7 & US 5045604 A | 1-9 |
| A | JP 64-79202 A (Denki Kagaku Kogyo Kabushiki Kaisha), 24 March, 1989 (24.03.89), Claims; page 2, lower left column, line 12 to lower right column, line 6; table 1 (Family: none) | 1-9 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 July, 2006 (28.07.06) | 08 August, 2006 (08.08.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/310570

C (Continuation). DOCUMENTS CONSIDERED TO BE RELEVANT

| Category* | Citation of document, with indication, where appropriate, of the relevant passages | Relevant to claim No. |
|---|---|---|
| A | JP 2-242806 A (Mitsubishi Rayon Co., Ltd.), 27 September, 1990 (27.09.90), Claims; page 2, lower left column, lines 4 to 9; page 10, upper right column, line 17 to page 11, upper right column, line 4 & US 5064911 A | 1-9 |
| A | JP 63-234002 A (Mitsubishi Rayon Co., Ltd.), 29 September, 1988 (29.09.88), Claims 1 to 11; page 8, upper right column, line 18 to page 9, upper right column, line 6 & US 4745159 A | 1-9 |
| A | JP 63-163302 A (Asahi Chemical Industry Co., Ltd.), 06 July, 1988 (06.07.88), Claims 1 to 3; page 6, upper left column, lines 2 to 15; page 8, upper right column (table 1); page 10, lower column (table 2) & US 4820778 A | 1-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4246374 A
- US 4727117 A
- US 4954574 A
- US 5004777 A
- US 5264483 A


### Non-patent literature cited in the description


- *Seikei Kakou,* vol. 15 (3), 194
- *Nikkei New Material,* 26 September 1988, 56